# EUROPEAN PATENT SPECIFICATION

(11) **EP 4 255 191 B1**
(45) Date of publication and mention of the grant of the patent: **09.10.2024**
(21) Application number: 21830348.5
(22) Date of filing: 01.12.2021
(51) Int. Cl.: A01N 63/00, A01N 59/16, A01N 43/16, A01N 31/16, A01N 25/28, A01P 1/00, A01P 3/00

(54) **CAPSIDIC NANOPARTICLES OF COWPEA MOSAIC VIRUS WITHOUT GENETIC MATERIAL FOR THE TREATMENT OF A DISEASE OF THE AERIAL PART OF A PLANT**
CAPSIDISCHE NANOPARTIKEL DES COWPEA MOSAIC VIRUS OHNE GENETISCHES MATERIAL ZUR BEHANDLUNG EINER KRANKHEIT DES OBERIRDISCHEN TEILS EINER PFLANZE
NANOPARTICULES DE CAPSIDIQUE DU VIRUS DE LA MOSAIQUE DU NIEBE SANS MATERIEL GENETIQUE POUR LE TRAITEMENT D'UNE MALADIE DE LA PARTIE AERIENNE D'UNE PLANTE

(30) Priority: 02.12.2020 IT 202000029498
(43) Date of publication of application: 11.10.2023
(73) Proprietor: Diamante Societa' Benefit S.r.l., 37135 Verona (VR) (IT)
(72) Inventor: DANZI, Davide, 37134 VERONA (VR) (IT); ZAMPIERI, Roberta, 37134 VERONA (VR) (IT); AVESANI, Linda, 37134 VERONA (VR) (IT); VANDELLE, Elodie, 37134 VERONA (VR) (IT)
(74) Representative: Gitto, Serena
(86) International application number: PCT/IT2021/050390
(87) International publication number: WO 2022/118355

(56) References cited:
- WO-A1-2017/210682
- WO-A1-2020/154739
- CHARIOU PAUL L ET AL: "Soil mobility of synthetic and virus-based model nanopesticides", NATURE NANOTECHNOLOGY, NATURE PUB. GROUP, INC, LONDON, vol. 14, no. 7, 20 May 2019 (2019-05-20), pages 712 - 718, XP036824559, ISSN: 1748-3387, [retrieved on 20190520], DOI: 10.1038/S41565-019-0453-7
- PAUL L. CHARIOU ET AL: "Delivery of Pesticides to Plant Parasitic Nematodes Using Tobacco Mild Green Mosaic Virus as a Nanocarrier", ACS NANO, vol. 11, no. 5, 27 March 2017 (2017-03-27), US, pages 4719 - 4730, XP055447329, ISSN: 1936-0851, DOI: 10.1021/acsnano.7b00823
- OCHOA W F ET AL: "Generation and Structural Analysis of Reactive Empty Particles Derived from an Icosahedral Virus", CHEMISTRY & BIOLOGY, CURRENT BIOLOGY, LONDON, GB, vol. 13, no. 7, 1 July 2006 (2006-07-01), pages 771 - 778, XP027991087, ISSN: 1074-5521, [retrieved on 20060701]
- CHARUDATTAN R ET AL: "SolviNix: R&D of a Bioherbicide for Tropical Soda Apple", 19 June 2005 (2005-06-19), Doorwerth, The Netherlands, pages 1 - 1, XP055830817, Retrieved from the Internet <URL:https://www.cabi.org/isc/FullTextPDF/2009/20093147051.pdf>
- YU LIN ET AL: "Novel Hypovirulence-Associated RNA Mycovirus in the Plant-Pathogenic Fungus Botrytis cinerea: Molecular and Biological Characterization", vol. 81, no. 7, 16 January 2015 (2015-01-16), US, pages 2299 - 2310, XP055830837, ISSN: 0099-2240, Retrieved from the Internet <URL:https://journals.asm.org/doi/epub/10.1128/AEM.03992-14> DOI: 10.1128/AEM.03992-14
- DANZI D, ZAMPIERI R, POLVERARI A, AVESANI L, VANDELLE: "Empty cowpea mosaic virus-based particles as potential nanotools for plant protection against diseases", JOURNAL OF PLANT PATHOLOGY, vol. 101, 16 September 2019 (2019-09-16) - 18 September 2019 (2019-09-18), pages 820 - 821, XP009533820

## Description

The present invention relates to cowpea mosaic virus capsid nanoparticles devoid of genetic material for the treatment of a disease of the aerial part of a plant. In greater detail, the present invention relates to cowpea mosaic virus capsid nanoparticles devoid of genetic material, as such or loaded with agricultural drugs, for the treatment of a disease of the aerial part of a plant, e.g. the leaf, said disease being caused by a phytopathogenic microorganism that attacks said aerial part, e.g. a fungus, a bacterium or a virus.

Increasing agricultural productivity is essential in order to confront the progressive, constant growth of the world population. However, achieving this objective is hindered by factors of an abiotic nature (water stress, climate changes, lack of nutrients) and biotic nature (microorganisms, insects, weeds, terricolous animals) which negatively impact the agricultural yield. In particular, the diseases caused by fungi, viruses and bacteria cause a significant loss of agricultural production, which can be of a quantitative nature, if one is talking about a decrease in the yield in the field, or a qualitative nature if a reduction occurs in the content of nutritive substances or in the quality of the product, due to aesthetic alterations (e.g. pigmentation) or contaminations of the food by microorganisms and/or toxic substances of a microbial nature (e.g. mycotoxins).

All over the world, agricultural crops are thus extensively treated with plant protection products to control diseases, with a consequent severe economic and environmental impact. Recently, many research groups and companies, also at an international level, have developed alternative strategies to combat diseases, which can be used both to supplement traditional control practices and as a starting point for the development of new plant protection strategies in agriculture. In fact, the development actions in the framework of a sustainable approach to agriculture include improving integrated pest control to reduce the intensive use of chemical products and synthetic plant protection products in order to ensure the sustainability of production systems. Research in the field of plant pathology has thus focused in recent years on developing alternative products to pesticides. In this regard, European Council Regulation (EEC) No. 2092/91 lists the substances that can be used for the treatment of the plants; among them, the most effective is copper, which is however subject to use limitations (Commission Regulation (EC) No. 889/2008), given its potential accumulation in soils and the consequent long-term effect on the soil microbiome (Dagostin et al., 2011). Taking into consideration the above-mentioned regulations, many countries have banned various pesticides, making plant disease management more complex and thus leading to the development of integrated pest control strategies. An important aspect of environmentally sustainable defence is 'biocontrol', which classically referred to the use of living organisms in the fight against parasites and pathogens but was subsequently extended to the use of biomolecules with a low environmental impact to control diseases. In recent times there has been an increase in the number of publications in this sector and a 230% increase in the global market (Naranjo et al., 2015). Consequently, since 2014 the European Union has pursued a policy initiative for the adoption of integrated pest control strategies, thus providing a greater impetus to the market for biocontrol products for the years to come (Lefebvre et al., 2015).

The use of natural molecules in the fight against plant diseases is hindered, however, by their short persistence in the field or low penetration into plant tissue. In this context, nanobiotechnologies, already broadly exploited in the medical realm and in some recent applications in the food sector, represent a true innovative key for the development of alternative solutions to pesticides for crop protection. Nanotechnologies are based on the development of particles of small dimensions, defined nanoparticles, characterised by a diameter ranging from 1 to 100 nm. Over the years nanotechnologies have been applied in many fields of research, such as medicine, materials engineering and electronics, but only recently have some begun to evaluate their potential in the agricultural field (Pérez-de-Luque and Rubiales, 2009), where they can be applied to develop delivery systems for substances such as pesticides, fertilisers or growth hormones, to increase their effectiveness and make the delivery system "smart", i.e. systems enabling a controlled, targeted delivery. For this purpose, nanopesticides based on synthetic or natural polymers, metal compounds or liposomes, which tend to persist in the environment, have been evaluated (Nuruzzaman et al., 2016).

Nanomaterials can potentially increase bioavailability, the dissemination and duration of a chemical compound and could consequently increase its effectiveness and decrease the cost of application. However, the nanoparticles of a polymeric, metallic or lipidic nature used in agriculture, though effective, tend to accumulate in the soil. A biodegradable alternative to nanoparticles is represented by plant viruses which, moreover, possess the interesting characteristic of being uniform, naturally monodisperse particles (Chariou et al., 2019). Their application for defending crops against pathogens is potentially very interesting, since plant protection compounds are generally effective at very low concentrations, but at the same time require repeated applications in order to be effective (Chariou et al., 2020). The use of viral nanoparticles as carriers for conventional crop protection products or new natural antimicrobial substances has the potential to provide a biodegradable product and increase the effectiveness of the substances themselves.

It is well known that CPMV (cowpea mosaic virus) is a virus belonging to the genus Comovirus and the family Comoviridae. CPMV mainly infects legumes; in particular, its natural host is the cowpea (Vigna unguiculata), from which it takes its name. The possibility of it being genetically and chemically modified, its resistance to high temperatures (up to 60 °C for 1 hour) and to different pH values (values comprised between 4 and 9) and the availability of purification protocols that ensure high yields (Montague et al., 2011) make CPMV an ideal candidate as a delivery system. In addition, thanks to genetic engineering, there is the possibility of obtaining CPMV empty virus-like particles (eVLPs), i.e. capsid particles devoid of genetic material and consequently non-infectious, stable and structurally identical to CPMV viral particles (Huynh et al., 2016). The CPMV capsid also exhibits an extraordinary resistance to extreme physicochemical conditions, such as those of gastrointestinal fluids (Berardi et al., 2018), and at the same time is innocuous for human cells (Wang et al., 2019). Encapsulation, or alternatively loading of molecules inside the CPMV capsid, is made possible thanks to the structure of the capsid itself, since in the area of junction of the small capsid proteins (small CPs) a pore is formed which is small in size, but sufficiently large to permit the passage of compounds into it. The mechanism requires that the molecules be able to passively disseminate inside the capsid while at the same time remaining weakly retained by the ionic forces that arise. This encapsulation process has been reported in the literature for both the whole virus and the viral particles devoid of genetic material for the delivery of fluorophores (feasibility tests), molecules applied in the medical realm (imaging or therapeutics), or the delivery of nematicides that act at level of the soil (Yildiz et al., 2013, Chariou et al., 2019).

In particular, with the objective of producing biodegradable nanopesticides, new nanopesticides produced from plant viruses, such as TMGMV (Tobacco Mild Green Mosaic Virus), CPMV (Cowpea Mosaic Virus), PhMV (Physalis Mosaic Virus) or RCNMV (Red Clover Necrotic Mosaic Virus), have been evaluated for the transport and delivery of nematocides into the soil (Cao et al., 2015; Chariou et al., 2017; Chariou et al., 2019). Also known is patent application WO2020154739, which concerns the use of nanopesticides produced from plant viruses, such as TMGMV and CPMV, for the transport and delivery of agrochemical agents into the soil, in particular at certain soil depths. The agrochemical agents can thus act in the soil against harmful microorganisms or organisms, such as nematodes, or against weeds, or they can be soil fertilising agents. Danzi et al. (J. Plant Pathol. 2019, 101, 820-821) describe the production of empty cowpea mosaic virus particles and their combination with plant immunity triggering peptides for inducing the plant immune system in *A. thaliana.*

However, no study to date has suggested or shown the possibility of applying CPMV viral nanoparticles (devoid of genetic material) to treat diseases caused by phytopathogenic microorganisms that affect the aerial parts of the plant, or phyllosphere, and which require the dissemination of the active ingredient at the level of the apoplast. In fact, the delivery experiments reported in the literature or in patent application WO2020154739 were conducted at a neutral pH (between 7.0 and 7.8), very different from the subacid pH of the apoplast.

In the light of the foregoing, there appears to be an evident need to be able to have new methods for treating and preventing diseases of the plant phyllosphere that overcome the disadvantages of the known products.

The solution according to the present invention fits into this context; it aims to provide a new product or method, which acts at the level of the phyllosphere, for the treatment and prevention of plant diseases.

According to the present invention, it has now been found that CPMV-eVLPs as such or loaded with natural molecules, of various structures, with antimicrobial activity or an activity of inhibiting the virulence of microorganisms, e.g. bacteria, are effective in controlling plant diseases caused by microorganisms that strike at the level of the phyllosphere.

In particular, the invention shows for the first time that i) molecules of varying nature (for example an antibiotic of the aminoglycoside family, an organic dye, stilbene, flavone, coumarin derivative) can be effectively encapsulated in CPMV-eVLPs and ii) CPMV-eVLPs are applicable as a nanocarrier system for the delivery of active substances at the level of the apoplast, where many phytopathogenic microorganisms can be found and which is characterised by a subacid pH. Furthermore, it has surprisingly been found that CPMV-eVLPs as such, i.e. not loaded with active molecules, have an antifungal effect (more specifically one of deregulating fungal growth) against fungi that attack the phyllosphere. The nanoparticles according to the present invention can be advantageously applied on the leaf so as to act against the development of pathogens both outside and inside the leaf itself, in the latter case it being necessary for the active ingredient to be delivered into the apoplast.

The experimental results reported below show that CPMV-eVLP nanoparticles can carry and deliver chemical compounds under conditions which mimic natural conditions, i.e. in a subacid pH environment like the one found in the apoplast. At the same time, the process of encapsulating the molecules within the viral nanoparticles has been improved by means of some simple, economical steps, such as cleaving the C-terminal portion of the small subunit, as described in the scientific literature (Sainsbury et al., 2011). The nanoparticles according to the present invention, thus rendered more homogeneous by the enzymatic cleavage compared to the nanoparticles of patent application WO2020154739, can be applied to, or rather loaded with, any type of molecule, thus making the CPMV-eVLP nanoparticles a highly versatile tool for various purposes. These considerations open the way for an applicative development of such nanoparticles in the agricultural field, with particular regard to the development of specific tools for different pathosystems. Furthermore, the high capacity of the CPMV capsid, and hence of the CPMV-eVLP nanoparticles, to withstand adverse physicochemical conditions makes the CPMV-crop protection product combination particularly interesting for application in the agricultural realm.

It is therefore specific object of the present invention the use of cowpea mosaic virus capsid nanoparticles devoid of genetic material belonging to said virus, as such or loaded with one or more agricultural drugs, for the treatment of a disease of the aerial part of a plant, e.g. the leaf, said disease being caused by a phytopathogenic microorganism that attacks said aerial part. For the treatment of this type of disease, a dissemination of the agricultural drug in the apoplast is required. According to the present invention, the particles are applied directly onto the aerial part of the plant, in particular onto the leaf, where penetration of the agricultural drug or of the particle into the leaf tissue takes place. Therefore, the present invention does not relate to products or agricultural drugs that are administered to the soil to act against soil organisms, such as nematodes, or against microorganisms of the rhizosphere or else against weeds, or to act as fertilisers that can be absorbed by the plant through the roots.

According to one embodiment of the invention, the cowpea mosaic virus capsid nanoparticles devoid of genetic material are also devoid of the C-terminal portion of the small subunit of the capsid protein of the virus. This part may approximately be identified as the portion comprised between Leu189 and Ala213, or more specifically from the K191 residue to Ala213 and/or from the R193 residue to the Ala213 residue and/or from the R195 residue to the Ala 213 residue of said subunit (Sainsbury, 2011, https://www.rcsb.org/structure/5FMO Entity ID:2).

According to the present invention, said microorganism can be selected from among a fungus, an oomycete, a bacterium, a phytoplasma or a virus.

According to the present invention, when said nanoparticles are used as such, said microorganism can be a fungus, i.e. the disease can be a fungal disease. Therefore, the nanoparticles according to the present invention can be used as such against fungal diseases of the aerial part of the plant, for example against *Botrytis cinerea.*

According to the present invention, said one or more agricultural drugs can be molecules of natural origin with antimicrobial activity or an activity of inhibiting the virulence of microorganisms. For example, a molecule that inhibits the virulence of phytopathogenic microorganisms can be any molecule capable of blocking the infection process of the microorganism by compromising the microbial virulence and/or inducing resistance in the plants. These molecules block the growth of the microorganism without killing it or act on the ability of the microorganism to infect the plant and the aggressiveness of the microorganism or induce active defence mechanisms of the plant.

According to the present invention, therefore, said one or more agricultural drugs can be selected from among a fungistat, a bacteriostat and/or a virustat.

By way of example, said one or more agricultural drugs that may be used according to the present invention can be selected from among inhibitors of bacterial virulence such as dicumarol, luteolin, quercetin, antifungals like resveratrol, and/or molecules with a broad-spectrum antimicrobial action such as copper sulphate.

It is a further object of the present invention a method for treating a disease of the aerial part of a plant, e.g. the leaf, caused by a phytopathogenic microorganism that attacks said aerial part, said method comprising or consisting of placing said aerial part of the plant in contact with cowpea mosaic virus capsid nanoparticles devoid of genetic material belonging to said virus, as such or loaded with one or more agricultural drugs.

As mentioned above, according to the method of the present invention, said microorganism can be selected from among a fungus, an oomycete, a bacterium, a phytoplasma or a virus.

According to the method of the present invention, when said nanoparticles are used as such, said microorganism can be a fungus, i.e. the disease can be a fungal disease. Therefore, the method according to the present invention can comprise the use of the nanoparticles according to the present invention as such against fungal diseases of the aerial part of the plant, for example against *Botrytis cinerea.*

According to the method of the present invention, said one or more agricultural drugs can be molecules of natural origin with antimicrobial activity or an activity of inhibiting the virulence of microorganisms, as indicated above. For example, said one or more agricultural drugs can be selected from among a fungistat, a bacteriostat and/or a virustat.

According to some embodiments, said one or more agricultural drugs can be selected from among dicumarol, luteolin, resveratrol, quercetin and/or copper sulphate.

The present invention further relates to cowpea mosaic virus capsid nanoparticles devoid of genetic material belonging to said virus, loaded with one or more plant protection products selected from among dicumarol, luteolin, quercetin, resveratrol and/or copper sulphate or an agricultural composition comprising said nanoparticles. As mentioned above, the nanoparticles can be devoid of the C-terminal portion of the small subunit of the capsid protein of the virus, for example said portion can consist in the amino acid sequence from the K191 residue to the Ala213 residue and/or from the R193 residue to the Ala213 residue and/or from the R195 residue to the Ala 213 residue of said subunit.

The present invention will now be described by an illustrative, but not limitative, way, with particular reference to some illustrative examples and the figures in the appended drawings, wherein:
- **Figure 1** shows that the distinction between the forms of CPMV through agarose gel electrophoresis makes it possible to visualise the particles that have the C-terminal part of the small capsid protein as a band that migrates more slowly compared to that of the particles in which the C-term was removed (left). An analysis of the integrity of the particles was performed by dynamic light scattering (right) and shows that the particles themselves appear with an average diameter of about 30 nm, similar to the size of the CPMV capsid.
- **Figure 2** shows that agarose gel electrophoresis makes it possible to visualise in some cases the delay in migration due to the presence of the cargo inside the CPMV. DAPI, 4',6-diamidino-2-phenylindole, super. supernatant.

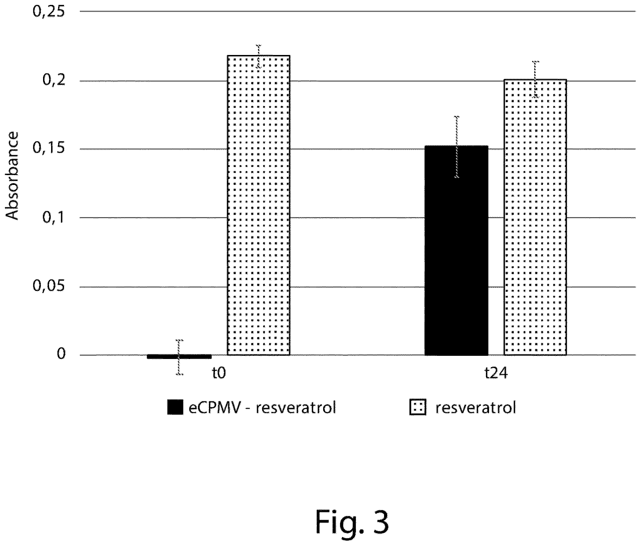

- **Figure 3** shows the interference in the absorbance reading at 420nm in the presence of pure resveratrol (at to and t24) or eCPMV-resveratrol (a t24).

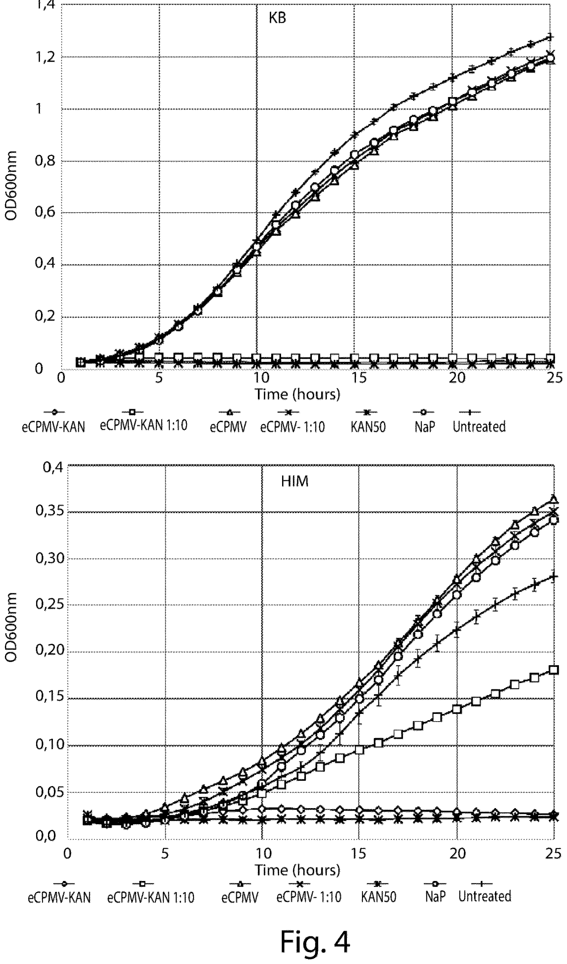

- **Figure 4** shows that the delivery of kanamycin by CPMV is visualised as inhibition of bacterial growth. The top panel shows the result of the experiment performed in an optimal medium (KB) and it can be observed that delivery of the antibiotic by CPMV takes place from the earliest hours. In the bottom panel, by contrast, the graph shows the inhibition of bacterial growth in the medium that reproduces the conditions of the apoplast (HIM). In this case as well, one observes a reduction in bacterial growth in the presence of CPMV loaded with kanamycin, which indicates the delivery thereof into the culture medium. eCPMV, non-loaded nanoparticle, eCPMV-Kan, nanoparticle loaded with kanamycin, 1/10, nanoparticles used at a 1/10 concentration.
- **Figure 5** shows the alteration in the growth of *Botrytis cinerea in vitro* in the presence of CPMV-eVLP nanoparticles (not loaded).

### EXAMPLE 1: Preparation of the nanoparticles according to the present invention, loading thereof with active ingredients and study on the delivery of the active ingredients to the apoplast

### MATERIALS AND METHODS

### 1. Production and purification of particles

### 1.1 Transient transformation of Nicotiana benthamiana

The two strains of *Agrobacterium tumefaciens* LBA4404 transformed respectively with the pEAQ-HT-24K vector and with the pEAQ-HT-VP60 vector (Peyret, 2013) were cultured in 4 mL of YEB (Yeast Extract Beef) containing rifampicin 50 µg/mL, streptomycin 300 µg/mL and kanamycin 50 µg/mL for 24 hours at 28 °C under stirring. 200 µL of each bacterial culture and 50 mL of fresh medium (LB) were transferred into flasks autoclaved beforehand and were cultured for 24 hours at 28°C under stirring. The next day the bacterial cultures were transferred into 50 mL centrifuge tubes and subjected to centrifugation at 4000 g for 20 minutes at room temperature. The supernatant was discarded and the pellet was resuspended in MMA buffer (sterile MgCl₂ 10 mM, MES 10 mM, acetosyringone 100 µM) to obtain an ODeoo nm of 0.4 for every culture. After 2 hours of incubation equal volumes of the two bacterial cultures were mixed and used to infiltrate, with a needleless syringe, 24 plants of *Nicotiana benthamiana (Italy),* 4-5 weeks old (4 upper expanded leaves per plant), grown under controlled conditions (constant 24°C, 10 h of light /14 h of darkness). The infiltrated leaves were sampled in liquid nitrogen 6 days post-infection (dpi).

### 1.2 Protein extraction

The sample leaves were ground in liquid nitrogen until obtaining a fine powder. 100 mg of the sample were transferred into a test tube and 3 volumes of 0.1 M sodium phosphate buffer pH 7.0 were added. The sample was mixed for 1 minute with a vortex mixer and subjected to centrifugation at 10,000 x g at 4°C for 30 minutes. The protein extracts thus obtained were analysed by SDS-PAGE and subsequent staining with Coomassie blue or western blot analysis. The excess samples were stored at -80°C.

### 1.3 Purification of CPMV-eVLP particles

At least 30 g of infiltrated leaves were homogenised in a beaker, kept in ice, with 3 volumes of 0.1 M sodium phosphate buffer pH 7.0 supplemented with 2% w/v of polyvinylpolypyrrolidone and an EDTA-free protease inhibitor tablet (Roche). The extract was filtered through 3 layers of Miracloth (Merck Millipore) and centrifuged at 4°C for 20 minutes at 13,000 g (rotor JA-14). PEG 6000 was added to the supernatant at a concentration of 4% and sodium chloride (NaCl) at a concentration of 0.2 M. The supernatant was then left under stirring overnight at 4°C. The next day, by centrifugation at 13000 g for 20 minutes at 4°C it was possible to recover what had precipitated together with the PEG. The pellet was then resuspended in a volume, equal to 0.5 ml/g of fresh tissue, of 0.01 M sodium phosphate buffer pH 7.0 for at least one hour at 4°C. The resuspended pellet was subjected to centrifugation at 27,000 g for 20 minutes at 4°C and, subsequently, the supernatant was subjected to ultracentrifugation at 118,700 g for 2 hours and 30 minutes at 4°C. Finally, the pellet obtained was resuspended overnight in 0.1 M sodium phosphate pH 7.0. The next day the remaining plant contaminants were removed by centrifugation at 10,000 g for 15 minutes at 4 °C. The supernatant was then subjected to anion exchange chromatography with DEAE Sephadex A-50 resin (GE Healthcare), with a sample-resin ratio of 4:1. The flow-through was collected and the concentration of purified particles was measured by means of a NanoDrop One spectrophotometer (Thermo Scientific), measuring at A280 and A260 nm.

### 2. Analysis of the particles

### 2.1. Visualisation of the nanoparticles on agarose gel

In order to visualise the forms of CPMV, 10 µg of particles were loaded into an agarose gel at 0.7% (w/v). Separation was achieved by means of electrophoresis at 70 V for 90 minutes. The particles were then visualised by means of the staining solution (Coomassie G-250 0.007%) and decoloured in 10% acetic acid.

### 2.2 Dynamic Light Scattering (DLS)

The dynamic light scattering (DLS) analysis was performed using a Zetasizer Nano ZS (Malvern Instruments, Malvern, UK). The CPMV particles (0.5 mg/mL) were left at room temperature for 5 minutes before the analysis. Measurements were made every 10 seconds at 25 °C, for a total of 5 measurements.

### 3. Enzymatic cleavage of the nanoparticles

The removal of the terminal portion of the small subunit of the capsid protein was achieved by chymotrypsin-mediated enzymatic cleavage (EC 3.4.21.1) performed at room temperature in 50 mM ammonium bicarbonate buffer pH 8.0 overnight with a CPMV:enzyme ratio of 1:50.

### 4. Loading of the eVLP nanoparticles

The loading of the particles was carried out by placing the CPMV and the molecule to be loaded in sodium phosphate buffer (0.1 M, pH 7.8) with a CPMV:molecule molar ratio of 1:10000 where possible, otherwise 1:5000. The reaction was continued overnight at room temperature under light stirring.

### 5. Bacterial growth curves

*Pseudomonas syringae* pv. *actinidiae CRAFRU* 10.22 and *Pseudomonas syringae* pv. *tomato* DC3000 were cultured in 4 mL of King's B medium (KB; glycerol 10 mL, peptone 20 g/L, MgSO₄ 0.725 g/L, K₂HPO₄ 1.5 g/L pH 7.2) (*Pseudomonas*) containing 50 µg/mL of rifampicin (*Pseudomonas syringae* pv. *tomato* DC3000) for 24 hours at 28 °C under stirring. The pre-inoculum was washed with KB medium or HIM medium (*hrp-inducing medium,* Rico and Preston, 2008) and for each strain the OD₆₀₀ was brought to a value of 0.01. The bacterial cells in the various media were inoculated (180 µL) into a 96-well microplate (Sarsted 96 Flat Bottom Transparent Polystyrene) and 20 µL of nanoparticles, loaded or empty (negative control), or kanamycin solution (final 50 µg/mL, positive control) were added. Bacterial growth was monitored for 24 hours, following the OD₆₀₀ nm with a Tecan Infinite 200 Pro.

### RESULTS

### 1. Enzymatic cleavage of the nanoparticles and loading with molecules of interest

The loading of the CPMV took place following the indications given in the literature (Yildiz, 2013) and adapted according to the characteristics of the selected molecules. The feasibility demonstration was carried out with an antibiotic, kanamycin in this specific case, as it is easy to detect its activity by monitoring the growth of the treated bacterial cells. The particles were loaded with kanamycin for 16 hours at room temperature in sodium phosphate buffer (0.1 M, pH 7.8).

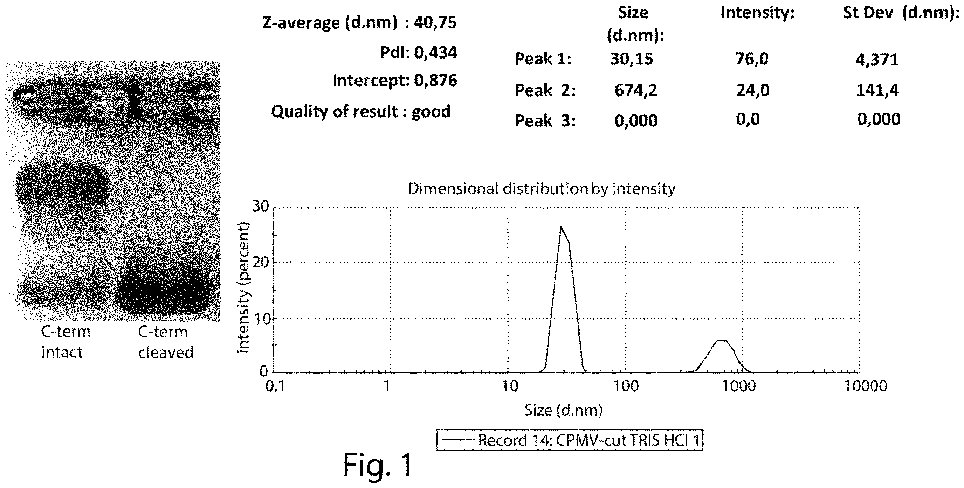

However, the loading was not always reproducible; this is most likely due to the presence of a short amino acid sequence in the terminal part of the small capsid protein. Indeed, it appears that this portion "regulates" the access of molecules to the inside of the CPMV; to remedy this problem, it is possible to remove that portion by using a proteolytic enzyme (Sainsbury *et al. 2010*)*.* This enzymatic reaction does not alter the structure of the capsid, which thus remains intact, and it is possible to detect it by means of native agarose gel electrophoresis and by means of the dynamic light scattering spectroscopy technique **(****Figure 1****).**

Rendering the inner surface of the CPMV more accessible to molecules makes the encapsulation more reproducible and further enables the capsids extracted during different purification processes, and by extension the entire process from the plant to the loaded particle, to be rendered uniform.

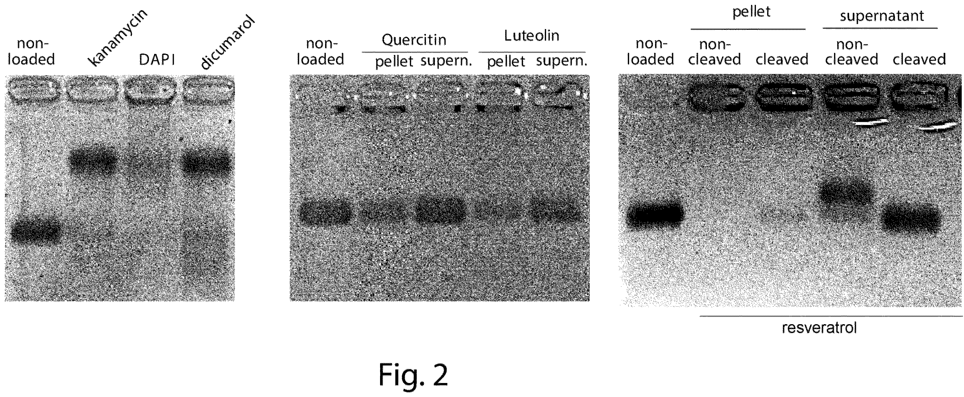

The cleaved nanoparticles were then loaded with different molecules, kanamycin and DAPI in this specific case, used to demonstrate the feasibility of the application, as well as dicumarol and luteolin, molecules of applicative interest, as they are inhibitors of bacterial virulence (demonstrated for *Pseudomonas syringae* pv. *actinidiae,* patent no. 102017000119674 of 11/02/2020) and resveratrol, with proven antifungal activity (Vestergaard and Hanne, 2019). That loading of the various molecules took place was then checked by means of agarose gel **(****Figure 2****).**

The presence of a shift in migration indicates a slower migration of particles loaded with kanamycin, DAPI and dicumarol (left panel), thus demonstrating the loading with the molecules of interest. This delay in migration is not equally evident for the other molecules (resveratrol and luteolin), probably because of their different chemical nature, but it is nonetheless significant. This result demonstrates the possibility of loading molecules of varying nature, in particular secondary plant metabolites (dicumarol, luteolin, resveratrol), which have been amply evaluated for their antimicrobial activity and possible application in the agricultural realm for sustainable control of plant diseases.

### 2. Evaluation of the delivery of the molecules of interest

In order to evaluate the delivery of resveratrol by the nanoparticles and its effectiveness on fungal growth, as reported in the literature (Vestergaard and Hanne, 2019), the CPMV-eVLP particles-resveratrol were used to treat conidia of *Botrytis cinerea in vitro.* The germination of the conidia and consequent growth of the mycelium were evaluated after 24h of incubation by measuring absorbance at 420nm. The non-loaded particles were used as a negative control, whilst as a positive control the fungal conidia were treated with pure resveratrol.

Unfortunately, the method proved not to be suitable for this purpose, since at time 0 the wells containing the pure resveratrol already showed a higher absorbance compared to the other wells treated with loaded and non-loaded particles or untreated, thus demonstrating an interference with the technique used. However, it was observed that, after 24 hours of treatment, the wells treated with CPMV-eVLP-resveratrol in turn showed a level of absorbance comparable to that of pure resveratrol, thus demonstrating the delivery of the secondary metabolites by the particles at a subacid pH (pH 6 in this experiment).

In contrast, kanamycin, used to demonstrate the feasibility of the approach, kills the bacterial strains taken into consideration; therefore, the delivery thereof by the capsid can be estimated by measuring the inhibition of bacterial growth under controlled conditions. In this context it is worth noting the ability to deliver molecules at a pH other than the neutral one, used up to now in the experiments reported in the literature. In particular, the application of loaded CPMV-eVLPs for the protection of plants requires that the particles be able to reach the apoplast of the plant cells so as to enter into contact with the pathogenic microorganisms and then deliver the loaded substances into this environment characterised by a subacid pH (about 5.5). Therefore, for the purpose of evaluating the delivery of molecules under natural conditions, the ability to inhibit bacterial growth was also tested in a culture medium that reproduces the conditions of the apoplast (HIM medium) **(****Figure 4****).** The control experiment was carried out in KB medium, which has an optimal pH for the delivery of the molecules (pH 7.2).

As expected, at a neutral pH one observes a complete inhibition of bacterial growth, comparable to that of the positive control (i.e. pure kanamycin), thus demonstrating the optimal delivery of the substances under these conditions. Furthermore, the first feasibility tests revealed the ability to deliver the molecules also at a subacid pH with a complete inhibition of bacterial growth in HIM with particles loaded with kanamycin. At the same time, a slower delivery compared to neutral pH conditions was observed, which can be explained by the change in size of the viral capsid in relation to the physicochemical forces it is exposed to. In fact, it is well known that viral capsids can swell or shrink as a consequence of the ionic forces they respond to and thus of the pH to which they are exposed.

### EXAMPLE 2: Study on the antifungal effectiveness of the nanoparticles according to the present invention when used as such

### MATERIALS AND METHODS

### 1. Production and purification of the particles

The particles according to the present invention were prepared with the method described in example 1.

### 2. Monitoring of fungal growth in vitro

Conidia were drawn in MilliQ water from a plate containing recently sporulated *Botrytis cinerea;* Tween-20 was added thereto at a final concentration of 0.05%. The conidia were counted by means of a Fast-Read102^{®} counting chamber (Biosigma) and diluted at a concentration of 1×10⁶ conidia/ml in the liquid culture medium PDB (Potato Dextrose Broth). One hundred eighty µl of the suspension were aliquoted into every well of a 96-well plate. 15 µg of CPMV-eVLPs or, as a control, MilliQ water and 10 mM sodium phosphate pH 7.0 used to resuspend the nanoparticles, were added to each well. The plates were photographed one week after the inoculation of the conidia.

### RESULTS

### Alteration of the growth of Botrytis cinerea in vitro

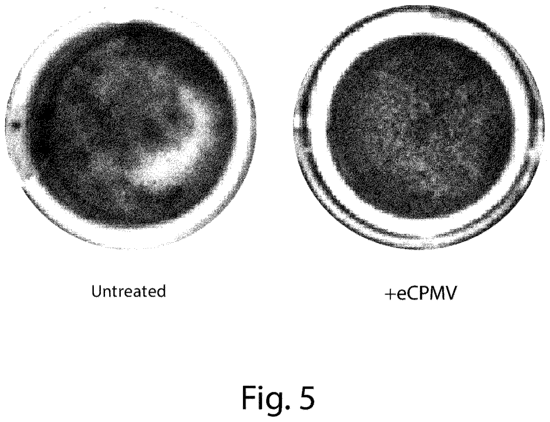

In the presence of sodium phosphate (negative control), a normal growth of the mycelium of *Botrytis cinerea* was observed, with the development of a grey mould at the centre, where the conidia were inoculated, and a discontinuous growth towards the walls of the well **(****Figure 5****).** The addition of CPMV-eVLP nanoparticles, by contrast, significantly modifies the growth of the fungus, which is more homogeneous, with the formation of a continuous coating that covers the well, losing the expected grey mould appearance. This result suggests a deregulation of the mechanisms governing the formation and development of the growth structures of the fungus, elements that are fundamental for its process of infecting plants.

### REFERENCES

- Vestergaard and Ingmer (2019) Antibacterial and antifungal properties of resveratrol. Int. J. Antimicrob. Agents. https://doi.org/10.1016/j.ijantimicag.2019.02.015.
- Yildiz et al. (2013) Infusion of imaging and therapeutic molecules into the plant virus-based carrier cowpea mosaic virus: cargo-loading and delivery. J. Control Release. doi:10.1016/j.jconrel.2013.04.023.
- Dagostin S., Hans-Jakob Schärer, Ilaria Pertot, Lucius Tamm, Are there alternatives to copper for controlling grapevine downy mildew in organic viticulture?, Crop Protection, Volume 30, Issue 7, 2011, Pages 776-788, ISSN 0261-2194, https://doi.org/10.1016/j.cropro.2011.02.031.
- Economic Value of Biological Control in Integrated Pest Management of Managed Plant Systems. Steven E. Naranjo, Peter C. Ellsworth, George B. Frisvold Annual Review of Entomology 2015 60:1, 621-645.
- Lefebvre M, Langrell RH, Gomez y Paloma S (2015) Incentives and policies for integrated pest management in Europe: a review. Agron Sustain Dev 35:27-45
- Pérez-de-Luque, A. and Rubiales, D. (2009), Nanotechnology for parasitic plant control. Pest. Manag. Sci., 65: 540-545. doi:10.1002/ps.1732.
- Md. Nuruzzaman, Mohammad Mahmudur Rahman, Yanju Liu, and Ravi Naidu Journal of Agricultural and Food Chemistry 2016 64 (7), 1447-1483 DOI: 10.1021/acs.jafc.5b05214.
- Jing Cao, Richard H. Guenther, Tim L. Sit, Steven A. Lommel, Charles H. Opperman, and Julie A. Willoughby. ACS Applied Materials & Interfaces 2015 7(18), 9546-9553 DOI: 10.1021/acsami.5b00940.
- Paul L. Chariou and Nicole F. Steinmetz. ACS Nano 2017 11 (5), 4719-4730 DOI: 10.1021/acsnano.7b00823.
- Chariou, P.L., Dogan, A.B., Welsh, A.G. et al. Soil mobility of synthetic and virus-based model nanopesticides. Nat. Nanotechnol. 14, 712-718 (2019). https://doi.org/10.1038/s41565-019-0453-7.
- Montague, N.P., Thuenemann, E.C., Saxena, P., Saunders, K., Lenzi, P. and Lomonossoff, G.P. (2011) Recent advances of cowpea mosaic virus-based particle technology. Hum. Vaccines 7, 383-390 https://doi.org/10.4161/hv.7.3.14989.
- Huynh, N.T., Hesketh, E.L., Saxena, P., Meshcheriakova, Y., Ku, Y.-C., Hoang, L.T. et al. (2016) Crystal structure and proteomics analysis of empty virus-like particles of cowpea mosaic virus. Structure 24, 567-575 https://doi.org/10.1016/j.str.2016.02.011.
- A. Berardi, D. J. Evans, F. Baldelli Bombelli and G. P. Lomonossoff, Nanoscale, 516 2018, 10, 1667-1679.
- Wang, C., Fiering, S.N. and Steinmetz, N.F. (2019), Cowpea Mosaic Virus Promotes Anti-Tumor Activity and Immune Memory in a Mouse Ovarian Tumor Model. Adv. Therap., 2: 1900003. doi:10.1002/adtp.201900003.
- Rico, A., and Preston, G. M. (2008). Pseudomonas syringae pv. tomato DC3000 uses constitutive and apoplast-induced nutrient assimilation pathways to catabolize nutrients that are abundant in the tomato apoplast. Mol. Plant Microbe Interact. 21, 269-282. doi: 10.1094/MPMI-21-2-0269.
- Peyret, H., & Lomonossoff, G. P. (2013, September). The pEAQ vector series: The easy and quick way to produce recombinant proteins in plants. Plant Molecular Biology. https://doi.org/10.1007/s11103-013-0036-1

## Claims

1. Use of cowpea mosaic virus capsid nanoparticles devoid of genetic material, as such or loaded with one or more agricultural drugs, for the treatment of a disease of the aerial part of a plant, such as the leaf, said disease being caused by a microorganism which attacks said aerial part.

2. Use according to claim 1, wherein said nanoparticles are devoid of the C-terminal portion of the small subunit of the capsid protein of the virus, for example said portion consisting of the amino acid sequence from the K191 residue to the Ala213 residue and/or from the R193 residue to the Ala213 residue and/or from the R195 residue to the Ala 213 residue of said subunit.

3. Use according to any one of claims 1-2, wherein said microorganism is selected from among a fungus, an oomycete, a bacterium, a phytoplasma, a virus.

4. Use according to any one of claims 1-3, wherein when said nanoparticles are used as such, said microorganism is a fungus.

5. Use according to any one of claims 1-3, wherein said one or more agricultural drugs are molecules of natural origin with antimicrobial activity, for example antibacterial, antifungal or antiviral activity, or an activity of inhibiting the virulence of microorganisms.

6. Use according to any one of claims 1-3 and 5, wherein said one or more agricultural drugs are selected from among a fungistat, a bacteriostat and/or a virustat.

7. Use according to any one of claims 1-6, wherein said one or more agricultural drugs are selected from among dicumarol, luteolin, quercetin, resveratrol, and/or copper sulphate.

8. Method for treating a disease of the aerial part of a plant,such as the leaf, caused by a microorganism that attacks said aerial part, said method comprising or consisting of placing said aerial part of the plant in contact with cowpea mosaic virus capsid nanoparticles devoid of genetic material, as such or loaded with one or more agricultural drug.

9. Method according to claim 8, wherein said microorganism is selected from among a fungus, an oomycete, a bacterium, a phytoplasma, a virus.

10. Method according to any one of claims 8-9, wherein when said nanoparticles are used as such, said microorganism is a fungus.

11. Method according to any one of claims 8-10, wherein said one or more agricultural drugs are molecules of natural origin with antimicrobial activity, for example antibacterial, antifungal or antiviral activity, or an activity of inhibiting the virulence of microorganisms.

12. Method according to any one of claims 8-11, wherein said one or more agricultural drugs are selected from among a fungistat, a bacteriostat and/or a virustat.

13. Method according to any one of claims 8-12, wherein said one or more agricultural drugs are selected from among dicumarol, luteolin, quercetin, resveratrol, and/or copper sulphate.

14. Cowpea mosaic virus capsid nanoparticles devoid of genetic material loaded with one or more plant protection agents selected from among dicumarol, luteolin, quercetin, resveratrol, and/or copper sulphate, or an agricultural composition comprising said nanoparticles.

## Patentansprüche

1. Verwendung von kapsidische Nanopartikeln des Cowpea-Mosaik-Virus ohne genetisches Material, als solche oder beladen mit einem oder mehreren landwirtschaftlichen Arzneimitteln, zur Behandlung einer Krankheit des oberirdischen Teils einer Pflanze, wie des Blattes, wobei diese Krankheit durch einen Mikroorganismus verursacht wird, der diesen oberirdischen Teil befällt.

2. Verwendung nach Anspruch 1, **dadurch gekennzeichnet, dass** den Nanopartikeln der C-terminale Teil der kleinen Untereinheit des Capsidproteins des Virus fehlt, zum Beispiel der Teil, der aus der Aminosäuresequenz vom K191-Rest bis zum Ala213-Rest und/oder vom R193-Rest bis zum Ala213-Rest und/oder vom R195-Rest bis zum Ala213-Rest der Untereinheit besteht.

3. Verwendung nach einem der Ansprüche 1 bis 3, wobei der Mikroorganismus ausgewählt ist aus einem Pilz, einem Oomyceten, einem Bakterium, einem Phytoplasma und einem Virus.

4. Verwendung nach einem der Ansprüche 1 bis 3, wobei der Mikroorganismus ein Pilz ist, wenn die Nanopartikel als solche verwendet werden.

5. Verwendung nach einem der Ansprüche 1 bis 3, wobei es sich bei dem einen oder den mehreren Agrararzneimitteln um Moleküle natürlichen Ursprungs mit antimikrobieller Aktivität, beispielsweise antibakterieller, antimykotischer oder antiviraler Aktivität, oder einer Aktivität zur Hemmung der Virulenz von Mikroorganismen handelt.

6. Verwendung nach einem der Ansprüche 1 bis 3 und 5, wobei der eine oder die mehreren landwirtschaftlichen Wirkstoffe aus einem Fungistat, einem Bakteriostatikum und/oder einem Virustat ausgewählt sind.

7. Verwendung nach einem der Ansprüche 1 bis 6, wobei der eine oder die mehreren landwirtschaftlichen Wirkstoffe aus Dicumarol, Luteolin, Quercetin, Resveratrol und/oder Kupfersulfat ausgewählt sind.

8. Verfahren zur Behandlung einer Krankheit des oberirdischen Teils einer Pflanze, wie z.B. des Blattes, die durch einen Mikroorganismus verursacht wird, der den oberirdischen Teil befällt, wobei das Verfahren das Inkontaktbringen des oberirdischen Teils der Pflanze mit kapsidische Nanopartikeln des Cowpea-Mosaik-Virus ohne genetisches Material, als solche oder beladen mit einem oder mehreren landwirtschaftlichen Wirkstoffen, umfasst oder daraus besteht.

9. Verfahren nach Anspruch 8, wobei das Mikroorgan aus einem Pilz, einem Oomyceten, einem Bakterium, einem Phytoplasma oder einem Virus ausgewählt ist.

10. Verfahren nach einem der Ansprüche 8 bis 9, wobei, wenn die Nanopartikel als solche verwendet werden, der Mikroorganismus ein Pilz ist.

11. Verfahren nach einem der Ansprüche 8 bis 10, wobei es sich bei dem einen oder den mehreren Agrararzneimitteln um Moleküle natürlichen Ursprungs mit antimikrobieller Aktivität, beispielsweise antibakterieller, antimykotischer oder antiviraler Aktivität, oder einer Aktivität zur Hemmung der Virulenz von Mikroorganismen handelt.

12. Verfahren nach einem der Ansprüche 8 bis 11, wobei der eine oder die mehreren landwirtschaftlichen Wirkstoffe aus einem Fungistat, einem Bakteriostatikum und/oder einem Virustat ausgewählt sind.

13. Verfahren nach einem der Ansprüche 8 bis 12, wobei der eine oder die mehreren landwirtschaftlichen Wirkstoffe aus Dicumarol, Luteolin, Quercetin, Resveratrol und/oder Kupfersulfat ausgewählt sind.

14. Kapsidische Nanopartikeln des Cowpea-Mosaik-Virus ohne genetisches Material, beladen mit einem oder mehreren Pflanzenschutzmitteln, ausgewählt aus Dicumarol, Luteolin, Quercetin, Resveratrol und/oder Kupfersulfat, oder eine landwirtschaftliche Zusammensetzung, die diese Nanopartikel enthält.

## Revendications

1. Utilisation de nanoparticules capsidiques du virus de la mosaïque du niébé sans matériel génétique, en tant que tel ou chargées d'un ou plusieurs médicaments agricoles, pour le traitement d'une maladie de la partie aérienne d'une plante, telle que la feuille, ladite maladie étant causée par un micro-organisme qui attaque ladite partie aérienne.

2. Utilisation selon la revendication 1, dans laquelle lesdites nanoparticules sont dépourvues de la partie C-terminale de la petite sous-unité de la protéine de capside du virus, par exemple ladite partie consistant en la séquence d'acides aminés allant du résidu K191 au résidu Ala213 et/ou du résidu R193 au résidu Ala213 et/ou du résidu R195 au résidu Ala 213 de ladite sous-unité.

3. Utilisation selon l'une quelconque des revendications 1 et 2, dans laquelle ledit micro-organisme est choisi parmi un champignon, un oomycète, une bactérie, un phytoplasme, un virus.

4. Utilisation selon l'une des revendications 1 à 3, dans laquelle, lorsque lesdites nanoparticules sont utilisées en tant que telles, ledit micro-organisme est un champignon.

5. Utilisation selon l'une quelconque des revendications 1 à 3, dans laquelle ladite ou lesdites drogues agricoles sont des molécules d'origine naturelle ayant une activité antimicrobienne, par exemple une activité antibactérienne, antifongique ou antivirale, ou une activité d'inhibition de la virulence des micro-organismes.

6. Utilisation selon l'une des revendications 1 à 3 et 5, dans laquelle ce ou ces médicaments agricoles sont choisis parmi un fongistat, un bactériostat et/ou un virustat.

7. Utilisation selon l'une des revendications 1 à 6, dans laquelle le ou les médicaments agricoles sont choisis parmi le dicumarol, la lutéoline, la quercétine, le resvératrol et/ou le sulfate de cuivre.

8. Méthode de traitement d'une maladie de la partie aérienne d'une plante, telle que la feuille, causée par un micro-organisme qui attaque ladite partie aérienne, ladite méthode comprenant ou consistant à mettre en contact ladite partie aérienne de la plante avec des nanoparticules capsidiques du virus de la mosaïque du niébé sans matériel génétique, telles quelles ou chargées d'un ou de plusieurs médicaments agricoles.

9. Méthode selon la revendication 8, dans laquelle ledit micro-organisme est choisi parmi un champignon, un oomycète, une bactérie, un phytoplasme, un virus.

10. Méthode selon l'une des revendications 8 à 9, dans laquelle, lorsque les nanoparticules sont utilisées en tant que telles, le micro-organisme est un champignon.

11. Méthode selon l'une quelconque des revendications 8 à 10, dans laquelle ladite ou lesdites drogues agricoles sont des molécules d'origine naturelle ayant une activité antimicrobienne, par exemple une activité antibactérienne, antifongique ou antivirale, ou une activité d'inhibition de la virulence des micro-organismes.

12. Méthode selon l'une quelconque des revendications 8 à 11, dans laquelle ladite ou lesdites drogues agricoles sont choisies parmi un fongistat, un bactériostat et/ou un virustat.

13. Méthode selon l'une des revendications 8 à 12, dans laquelle le ou les médicaments agricoles sont choisis parmi le dicumarol, la lutéoline, la quercétine, le resvératrol et/ou le sulfate de cuivre.

14. Nanoparticules de capside du virus de la mosaïque du niébé dépourvues de matériel génétique et chargées d'un ou de plusieurs agents phytopharmaceutiques choisis parmi le dicumarol, la lutéoline, la quercétine, le resvératrol et/ou le sulfate de cuivre, ou composition agricole comprenant lesdites nanoparticules.
